(19) Europäisches Patentamt
European Patent Office
Office européen des brevets

(11) EP 3 270 441 A1

(12) EUROPEAN PATENT APPLICATION
published in accordance with Art. 153(4) EPC

(43) Date of publication:
17.01.2018 Bulletin 2018/03

(51) Int Cl.:
*H01M 2/16* (2006.01)

(21) Application number: 16761769.5

(86) International application number:
PCT/JP2016/057251

(22) Date of filing: 08.03.2016

(87) International publication number:
WO 2016/143801 (15.09.2016 Gazette 2016/37)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 09.03.2015 JP 2015046520

(71) Applicant: Nippon Kodoshi Corporation
Kochi-shi, Kochi 781-0395 (JP)

(72) Inventors:
• FUKUNAGA Ryoichi
Kochi-shi
Kochi 781-0395 (JP)
• UETA Masahiko
Kochi-shi
Kochi 781-0395 (JP)

(74) Representative: DREISS Patentanwälte PartG
mbB
Friedrichstrasse 6
70174 Stuttgart (DE)

(54) **SEPARATOR AND NONAQUEOUS BATTERY**

(57) The present invention aims to provide a separator having high safety, high output characteristics, and excellent heat resistance, and a nonaqueous battery including the separator. The separator is characterized in that it is a porous sheet formed using a specifically fibrillated raw material that has fibrillated, regenerated-cellulose fibers as necessary main components. Average pore diameter of through-holes is 0.03 $\mu$m to 1.0 $\mu$m inclusive. A nonaqueous battery is then manufactured using this separator.

**Description**

TECHNICAL FIELD

The present invention relates to a separator suitable to be used in a nonaqueous battery.

BACKGROUND ART

A secondary battery having a high energy density has been in demand due to the spread of electric vehicles and high-performance portable electronic devices. A lithium-ion secondary battery is noted as a secondary battery in response to this demand.
The lithium-ion secondary battery has a high energy density that allows supply of approximately 3.7V as an average voltage; however, since an aqueous electrolyte as used in an alkaline secondary battery cannot be employed, a nonaqueous electrolyte having excellent oxidation- and reduction-resistant properties is employed.
As a result, while a porous film made of mostly polyolefin such as polyethylene is often used as a separator used in a lithium-ion secondary battery, there is a possibility of a short circuit and thermal runaway, thereby leading to combustion when trouble such as overcharging progresses, increasing the temperature up to the melting temperature of polyolefin or higher.
Moreover, the lithium-ion secondary battery often uses, as a negative electrode material, graphite that can supply a potential close to the lithium metal precipitation potential. In this case, a charging voltage of 4.2V or higher makes it easy for lithium metal to precipitate. It is possible that lithium dendrite generates if overcharging is continued too long, breaking through the separator and causing a short circuit as well as thermal runaway, and thereby leading to combustion.
Therefore, many types of heat-resistant separators that do not melt nor shrink even at temperatures near 200°C are currently proposed. Implementation of a nonwoven cloth using heat-resistant fibers as a separator is also under examination. However, since a nonwoven cloth separator typically has an average pore diameter several times greater than the conventional porous film and its distribution width is also large, improvement in short-circuit resistance at the time of charging as described above is required.
Until now, a separator as described below has been proposed for improving heat resistance and internal short-circuit defects of a nonwoven cloth or porous film.
For example, a nonaqueous battery using a paper separator with excellent rate characteristics due to having high porosity, and with excellent heat resistance is proposed, where short-circuit resistance in the initial assembly stage is confirmed in working examples (Patent Document 1).
However, requirements for miniaturization of pore diameter are not mentioned, nor is it made clear whether or not it has dendrite resistance when being overcharged as described above.
Moreover, a separator for a lithium-ion secondary battery using cellulose fibers is proposed. It has high mechanical strength, excellent internal resistance and internal short-circuit defective rate, and especially excellent discharging characteristics with small fluctuation and cycle characteristics at a high rate (Patent Document 2). However, requirements for miniaturization of pore diameter are not mentioned, nor is it made clear whether or not it is safe when being overcharged as described above.
Furthermore, a separator resulting from layering heat-resistant porous layers made of heat-resistant polymers such as aromatic polymides on at least one side of a polyolefin microporous film is proposed (Patent Document 3). However, the polyolefin microporous film that is a base material melts at a high temperature, thereby possibly decreasing the strength significantly.
Furthermore, a separator having a heat-resistant filler coated on the surface is proposed (Patent Document 4). However, the heat-resistant filler is adhered to a base material surface using an organic binder and may likely fall off, possibly leading to degradation of the binder at high temperatures.

Prior Art Documents

Patent Documents

Patent Document 1: JP H 08-306352A
Patent Document 2: JP 2012-008559A
Patent Document 3: JP 2002-355938A
Patent Document 4: JP Patent 4151852

## DISCLOSURE OF THE INVENTION

Problem to be Solved by the Invention

The present invention aims to resolve the above problems, and provides a separator that allows a nonaqueous battery to have high safety and heat resistance as well as high output characteristics, and a nonaqueous battery including said separator.

Means of Solving the Problem

The configuration below, for example, is included as a means for resolving the above problems.

That is, a separator according to the present invention is characterized in that it is a porous sheet made to a thickness of 5 to 60 $\mu$m, a porosity of 30 to 80%, and an average pore diameter of through-holes of 0.03 $\mu$m to 1.0 $\mu$m, and is using a raw material made of fibrillated, regenerated-cellulose fibers having a fiber diameter of 2.0 dtex or less and a fiber length of 8 mm or less.

Moreover, for example, 30% or more of the through-holes are distributed within a range of $\pm$50% of the average pore diameter. Alternatively, the raw material contains 60 to 100% of the regenerated-cellulose fibers.

Further, for example, the porous sheet is pressed.

Yet further, a nonaqueous battery according to the present invention uses any one of the separators given above.

Results of the Invention

According to the present invention, an optimal separator may be provided for the nonaqueous battery having high output characteristics and high reliability as well as heat resistance. Moreover, a nonaqueous battery using the separator of the present invention may be provided as an optimal battery for use as a power source for an electric vehicle that requires high safety.

## DESCRIPTION OF EMBODIMENTS

An embodiment of the present invention is explained in detail hereafter.

A separator of the embodiment contains regenerated-cellulose fibers having a fiber diameter of 2.0 dtex or less and a fiber length of 8 mm or less as an essential component, and is a porous sheet formed using 60% by mass or greater of the raw material having a mean fiber length of the regenerated cellulose within a range of 0.3 to 1.5 mm and a fibrillation rate (Kajaani fines rate) of 2 to 50% obtained through refining (fibrillating) the regenerated-cellulose fibers. The separator is incorporated into the nonaqueous battery.

Fibrillation here means making raw material fibers include at least a portion having a fiber length of 1 $\mu$m or less, within the parts minutely divided mainly parallel to the fiber axis.

Methods of fibrillating (that is, refining) raw material fibers include those that use a refiner, a beater, a mill, a grinding device, a homogenizer, an ultrasonic crushing machine, a high-pressure homogenizer, etc. Of those, a method using either the refiner or the beater is particularly preferable.

Other fibers blended with the refined, regenerated-cellulose fibers are not particularly limited, and may be either a natural pulp, such as Manila hemp, sisal pulp, softwood kraft pulp, or a synthetic fiber such as PET fiber, PP fiber, PPS fiber, etc.

Moreover, the degree of refining the other fibers should be in accordance with degree of refining the regenerated-cellulose fibers. Furthermore, the mixture ratio of the refined, regenerated-cellulose fibers and the other fibers is determined according to the amount of the refined raw material of the regenerated-cellulose fibers.

The separator of the embodiment may be manufactured by a so-called wet paper making method using a combination paper making machine made from a combination of the same or different kinds of a cylinder machine, a Fourdrinier machine, a tanmo machine, and/or an inclination type paper making machine. A raw material slurry has a dispersant, a thickener, an inorganic filler, an organic filler, a defoaming agent, etc. added as needed in addition to the fiber raw material. This raw material slurry used in the embodiment is prepared in a solid component concentration of approximately 10 to 0.0005% by mass. In actual use, this raw material slurry is further diluted to a predetermined concentration so as to make paper.

The separator of the embodiment obtained through paper making may be a separator for a lithium-ion secondary battery, and may go through a pressing process such as calendaring, thermal calendaring etc. so as to control porosity and pore diameter. Particularly, when a porous sheet containing refined, regenerated-cellulose fibers goes through a pressing process under a linear pressure of 50 kg/cm to 750 kg/cm, it will preserve microporosity as a separator because little bonding occurs and the pores do not close due to inter-fiber bonding adherence. In contrast, when a conventional polyolefin microporous film is used, the pores close when pressed, and can thus no longer function as a separator.

<Measurement of fiber length and fiber diameter>

Fiber length and mean fiber length of solvent spinning cellulose fibers according to the embodiment are measured at the Kajaani Fiber Lab (manufactured by Metso Automation) according to JIS P8226-2 'Pulps - Determination of fibre length by automated optical analysis - Part 2: Unpolarized light method' (ISO16065-2).

'Mean fiber length' of regenerated-cellulose fibers used in the embodiment means 'length-weighted mean fiber length' calculated as continuous fiber length L ($\ell$) according to the above-mentioned method. Moreover, 'fibrillation rate' means fineness ($\ell$) calculated at the same time.

<Separator>

The separator of the embodiment will be described in more detail. In the embodiment, the separator has regenerated-cellulose fibers as a main raw material, as described above, and is obtained by paper-making through a paper making method after fibrillation (refining) using 60% to 100% by weight of solvent spinning cellulose fibers. At this time, a refining degree is specified by CSF (Canadian Standard Freeness) and a CSF value of regenerated-cellulose fibers is within a range of 600 mL to 0 mL as a standard.

The separator of the embodiment preferably has a thickness of 5 $\mu$m to 60 $\mu$m and a density of 0.25 g/cm$^3$ to 1.1 g/cm$^3$, more preferably a thickness of 10 $\mu$m to 25 $\mu$m and a density of 0.3 g/cm$^3$ to 0.60 g/cm$^3$.

If the thickness of the porous sheet drops below 5 $\mu$m, it may lack uniformity, and separator functions may be lost. Meanwhile, if the thickness exceeds 25 $\mu$m, there is fear that the resistance deriving from the separator when the separator is incorporated into the nonaqueous battery is increased.

Moreover, there is fear that if the density of the porous sheet drops below 0.25 g/cm$^3$, the porous sheet may lack uniformity, and if the density thereof exceeds 1.1 g/cm$^3$, the resistance when the separator is incorporated into the nonaqueous battery will increase.

When the separator of the embodiment is used as a nonaqueous battery separator, a thickness of 10 $\mu$m to 25 $\mu$m is preferable from the perspective of short-circuit prevention characteristics, electrolyte retaining property, and separator resistance. A thinner separator than 10 $\mu$m may weaken the short-circuit prevention characteristics and electrolyte retaining property. Moreover, a thickness exceeding 25 $\mu$m makes the inter-electrode distance longer, increases the resistance of the separator itself, and reduces the battery performance, which are unfavorable.

<Application to nonaqueous battery>

A positive-electrode active material in the nonaqueous battery that uses the separator of the embodiment is a material blended with at least one of a metal chalcogen compound such as $TiS_2$, $MoS_2$, NbSe etc., organic sulfur, a metal oxide such as $V_2O_5$, $MnO_2$, $Nb_2O_5$, etc., a polyanionic oxide such as $LiCoO_2$, $LiNiO_2$, $Li_xMn_2O_2$, iron phosphate etc., a ternary lithium-containing composite metal oxide called nickel-cobalt-manganese or nickel-cobalt-aluminum, a polymer such as polyaniline, polypyrrole etc., or carbon fluoride.

Particularly, a complex oxide containing an alkaline metal or alkaline earth metal such as lithium, sodium or magnesium, expressed by the general formula $Li_xM_yN_2O_2$ (M represents at least one transition metal, and N represents at least one non-transition metal. While M is not particularly limited, Co, Ni, Fe, Mn, V, Mo etc. can be considered, and while N is also not particularly limited, Al, In, Sn etc. can be considered.) that is a positive-electrode active material capable of doping and de-doping lithium ions is preferable.

As a specific example of a positive-electrode active material, the following oxides represented by chemical expressions including Li ions may be considered.

Lithium-colbalt oxide, for example, $Li_xCo_yN_zO_2$ (N is at least a kind of metal selected from Al, In, and Sn, $0<x\leq1.1$, $0.5<y\leq1$, $z\leq0.1$), $Li_xCoO2$ ($0<x\leq1$), or $Li_xCo_yNi_zO_2$ ($0<x\leq1$, y+z=1) Lithium-nickel oxide, for example, $Li_xNiO_2$ ($0<x\leq1$)

Lithium-manganese oxide, for example, $Li_xMnO_2$, $Li_xMn_2O_4$ ($0<x\leq1$) or $LiCo_xMn_{2-x}O_4$ ($0<x\leq0.5$)

Lithium-chromium oxide, for example, $Li_xCr_3O_8$ ($0<x\leq1$), or $Li_xCrO_2$

Lithium-vanadium oxide, for example, $Li_xV_2O_5$ ($0<x\leq1$), $Li_xV_6O_{13}$, or $Li_{1+x}V_3O_8$

Lithium-molybdenum oxide, for example, $Li_xMoO_2$

Lithium-molybdenum disulfide, for example, $Li_xMoS_2$

Lithium-titanium oxide, for example, $Li_xTi_2O_4$

Lithium-titanium sulfide, for example, $Li_xTi_2S_2$

Lithium-iron oxide, for example, $Li_xFeO_2$ ($0<x\leq1$), $Li_xFe_yN_2O_z$ (N is at least a kind of metal selected from Co, Ni, Ti, and Mn, $0<x\leq1$, $0.8<y\leq0.99$, $0.01<z\leq0.2$)

Especially preferable of these are lithium-cobalt oxide, lithium-nickel oxide, lithium-manganese oxide, and lithium-iron oxide.

A negative-electrode active material in the nonaqueous battery of the embodiment can be any one of an alkaline metal alloy or alkaline earth metal alloy of LiAl or the like, made of Li, Na, Mg etc., a carbon-based material, a silicon, a silicide or tin-based material, a conductive polymer material such as polyacene or poly-p-phenylene, or a metal oxide such as $Li_xFe_2O_2$, $Li_xWO_2$, etc.

A negative-electrode active material that can dope and de-dope lithium ions is particularly desirable. Lithium, sodium, magnesium etc. insertable negative-electrode active materials such as a carbonaceous material, for example, graphite, pyrolytic carbon, pitch coke, needle coke, petroleum coke, and an organic-polymer sintered substance (sintered substance of a phenol resin, a furan resin, polyacrylonitrile, or the like), lithium titanate, or sodium titanate, are preferable.

The electrolyte of the electrolytic solution used in the nonaqueous battery of the embodiment may be any one or a blend of two or more of lithium salts such as $LiClO_4$, $LiPF_6$, $LiAsF_6$, $LiBF_4$, $CH_3SO_3Li$, $CF_3SO_3Li$, $(CF_3SO_2)_2NLi$ or the like.

An electrolyte solvent used in the nonaqueous battery of the embodiment is any one or a blend of two or more of propylene carbonate, ethylene carbonate, dimethyl carbonate, diethyl carbonate, methylethyl carbonate, 1, 2-di-methoxyethane, 1, 2-di-ethoxyethane, $\gamma$-butyrolactone, tetrahydrofuran, 2-methyltetrahydrofuran, 1, 3-dioxolane, sulfolane, methylsulfolane, acetonitrile, propionitrile, methyl formate, ethyl formate, methyl acetate, ethyl acetate, and a glyme.

While the examples of positive-electrode active materials, negative-electrode active materials, electrolytes of the electrolytic solution, and solvents that can be used in the nonaqueous battery of the embodiment have been given above, they are not limited thereto.

Working Examples

Working examples according to the present invention are described next. Evaluation of various characteristics described later for the separator manufactured using the manufacturing method described in the embodiment of the present invention has been carried out.

In the following working examples, refinable regenerated-cellulose fibers, which are a raw material for the separator used in the nonaqueous battery of the embodiment according to the present invention, are cut to 2 to 8 mm and then refined to have an appropriate CSF value based on the above-mentioned standard using a predetermined beater such as a refiner. On the other hand, once natural fibers as mixed raw materials are refined appropriately in the same manner, these refined raw materials are blended appropriately so as to make a porous sheet of paper in a predetermined thickness.

To make it into a more desired thickness, the above porous sheet is pressed under a linear pressure of 50 kg/cm to 750 kg/cm at a temperature between room temperature and 170°C. The nonaqueous battery of the embodiment is manufactured using the separator obtained in this manner.

<Measurement of separator porosity, thickness, and pore diameter>

A basis weight for estimating porosity is measured in conformity with JIS P8124. Moreover, thickness is measured using a method stipulated in JIS C 2300-2. Furthermore, measurement of pore diameter is performed using the capillary flow meter CFP-1200 (manufactured by PMI) in conformity with JIS K3832, ASTM F316-03 and ASTM E1294-89. Percentages of the through-holes existing within ±50% of an average pore diameter to all the through-holes are added up as degree of pore concentration, based upon the frequency distribution of respective pore diameters.

<Measurement of separator resistance>

An assembly cell is used for measurement of the resistance of the separator. Here, the separator is cut to a round piece 16 mm in diameter, which is then impregnated in a 1:1 (volume ratio) diethylene carbonate / ethylene carbonate electrolytic solution having $LiPF_6$ (1M concentration) as an electrolyte and is sandwiched between SUS304 electrodes 15.5 mm in diameter so as to measure AC impedance of the round piece at 0.5 Hz to 1 MHz using an impedance meter. The measured AC impedance is plotted on a graph with the horizontal axis as a real axis and the lateral axis as an imaginary axis, and the plotted point of intersection is taken as the separator resistance.

<Manufacture method of positive electrode>

90 part by weight of $LiCoO_2$, 5 part by weight of acetylene black as a conductive material, and 5 part by weight of PVDF as a binding material are combined with N-methylpyrrolidone so as to obtain a coating slurry. This coating slurry is then coated using a doctor blade method on one side of an Al foil current collector having a width of 100 mm and thickness of 15 $\mu$m. This coated article is roll pressed, and punched out at a prescribed size, thereby forming a positive electrode.

<Manufacture method of negative electrode>

94 part by weight of graphite, 3 part by weight of acetylene black as a conductive material, and 3 part by weight of PVDF as a binding material are combined with N-methylpyrrolidone so as to obtain a coating slurry. This slurry is then coated using the doctor blade method on one side of a Cu foil current collector having a width of 100 mm and thickness of 20 $\mu$m. This coated article is rolled and pressed, and punched out in a prescribed size, thereby forming a negative electrode.

<Manufacture method of nonaqueous battery>

A 1:1 (volume ratio) diethylene carbonate / ethylene carbonate electrolytic solution having $LiPF_6$ (1M concentration) as an electrolyte is impregnated in the positive electrode, the negative electrode, and the separator, and caulked and sealed so as to make a coin-type nonaqueous battery having a 2032-type coin cell form.

<Evaluation method for nonaqueous battery>

<Initial charging and discharging efficiency>

The manufactured nonaqueous battery is charged with a constant current until reaching 4.2V at a 0.5C rate and a temperature of 30°C, and is discharged with a constant current until reaching 2.7V at a 0.5C rate so as to find a charging capacity and a discharging capacity. Initial charging and discharging efficiency is calculated by the following equation.

$$\text{Initial charging and discharging efficiency (\%)}$$
$$= (\text{discharging capacity / charging capacity}) \times 100$$

Existence of any of the following short-circuit defects is determined using an impedance meter for 100 manufactured batteries.

<High temperature exposure test>

A high temperature exposure test is conducted by charging the manufactured nonaqueous battery with a constant current until reaching 4.2V at a 0.5C rate and a temperature of 30°C, and leaving it at 200°C for ten minutes so as to confirm whether or not there is a short-circuit defect.

<Evaluation of charging performance>

The battery is charged at 5V so as to be evaluated. This is carried out in order to create an overcharged condition of 5V, in which safety is judged from a short-circuit defective rate in the case of a higher than normal charging voltage.
More specifically, it is judged from a short-circuit defective rate when the manufactured nonaqueous battery is charged with a constant current until reaching 5.0V at a 1.0C rate and a temperature of 60°C.

<Working Example 1>

A porous sheet having a thickness of approximately 20 $\mu$m is made using 100% raw material obtained by refining regenerated cellulose having a fiber diameter of 1.0 dtex and a fiber length of 5 mm until reaching a mean fiber length of approximately 0.4 mm and a fibrillation rate of 3.55%. This sheet is used as a separator of Working Example 1. Battery capacity, initial short-circuit defective rate, short-circuit defective rate that indicates heat resistance after an elapse of 10 minutes at 200°C, and short-circuit defective rate when charged up to 5V are measured for a battery using this separator. Measurement results of Working Example 1 are given in Table 1.

[Table 1]

Table 1

| | Used raw material | Raw material fiber diameter | Raw material fiber length | Kajaani fiber length | Kajaani fibrillation rate | Thickness | Porosity | Density | Average pore diameter | Degree of pore concentration | Separator resistance | Initial charging efficiency | Initial short-circuit rate | Short-circuit rate when left at 200°C for 10 minutes | Short-circuit rate when overcharged up to 5V |
|---|---|---|---|---|---|---|---|---|---|---|---|---|---|---|---|
| | | dtex | mm | mm | % | μm | % | g/cm$^3$ | μm | % | Ω | % | | | |
| Working Example 1 | 100% Solvent spinning rayon | 1 | 5 | 0.4 | 3.55 | 20.3 | 68.2 | 0.48 | 0.41 | 74 | 0.68 | 100 | 0 | 0 | 0 |
| Working Example 2 | 100% Solvent spinning rayon | 2 | 5 | 0.9 | 5.51 | 20.4 | 67.1 | 0.50 | 0.43 | 77 | 0.71 | 100 | 0 | 0 | 0 |
| Comparative Example 1 | 100% Solvent spinning rayon | 2.5 | 5 | 1.45 | 2.1 | 24 | 74.2 | 0.39 | 1.8 | 21 | 0.65 | 91 | 0 | | 74 |

<Working Example 2>

A porous sheet having a thickness of approximately 20 $\mu$m is made using 100% raw material obtained by refining regenerated cellulose having a fiber diameter of 2.0 dtex and a fiber length of 5 mm until reaching a mean fiber length of 0.9 mm and a fibrillation rate of 5.51%. This sheet is used as a separator of Working Example 2. Battery characteristics of the battery using this separator are measured in the same manner as above. Measurement results of Working Example 2 are given in Table 1.

[Table 2]

Table 2

|  | Used raw material | Raw material fiber diameter | Raw material fiber length | Kajaani fiber length | Kajaani fibrillation rate | Thickness | Porosity | Density | Average pore diameter | Degree of pore concentration | Separator resistance | Initial charging efficiency | Initial short-circuit rate | Short-circuit rate when left at 200°C for 10 minutes | Short-circuit rate when overcharged up to 5V |
|---|---|---|---|---|---|---|---|---|---|---|---|---|---|---|---|
|  |  | dtex | mm | mm | % | $\mu$m | % | g/cm$^3$ | $\mu$m | % | $\Omega$ | % |  |  |  |
| Working Example 3 | 100% Solvent spinning rayon | 1.5 | 2 | 0.8 | 6 | 19.3 | 66.2 | 0.51 | 0.39 | 78 | 0.6 | 100 | 0 | 0 | 0 |
| Working Example 4 | 100% Solvent spinning rayon | 1.8 | 8 | 1.2 | 3.29 | 20 | 68.9 | 0.47 | 0.4 | 75 | 0.62 | 100 | 0 | 0 | 0 |
| Comparative Example 2 | 100% Solvent spinning rayon | 1.5 | 10 | 1.3 | 1.2 | 23 | 74.1 | 0.39 | 1.1 | 25 | 0.64 | 98 | 0 | - | 43 |

<Comparative Example 1>

A porous sheet having a thickness of approximately 20 $\mu$m is made using 100% raw material obtained by refining regenerated cellulose having a fiber diameter of 2.5 dtex and a fiber length of 5 mm until reaching a mean fiber length of 1.45 mm and a fibrillation rate of 2.1%. This sheet is used as a separator of Comparative Example 1. Battery characteristics of the battery using this separator are measured in the same manner as above. Measurement results are given in Table 1.

<Working Example 3>

A porous sheet having a thickness of approximately 20 $\mu$m is made using 100% raw material obtained by refining regenerated cellulose having a fiber diameter of 1.5 dtex and a fiber length of 2 mm until reaching a mean fiber length of 0.80 mm, and is used as a separator of Working Example 3. Battery characteristics of the battery using this separator are measured in the same manner as above. Measurement results are given in Table 2.

<Working Example 4>

A porous sheet having a thickness of approximately 20 $\mu$m is made using 100% raw material obtained by refining regenerated cellulose having a fiber diameter of 1.5 dtex and a fiber length of 8 mm until reaching a mean fiber length of 1.2 mm and a fibrillation rate of 3.29%. This sheet is used as a separator of Working Example 4. Battery characteristics of the battery using this separator are measured in the same manner as above. Measurement results are given in Table 2.

<Comparative Example 2>

A porous sheet having a thickness of approximately 20 $\mu$m is made using 100% raw material obtained by refining regenerated cellulose having a fiber diameter of 1.5 dtex and a fiber length of 10 mm until reaching a mean fiber length of 1.3 mm and a fibrillation rate of 1.2%. This sheet is used as a separator of Comparative Example 2. Battery characteristics of the battery using this separator are measured in the same manner as above. Measurement results are given in Table 2.

<Comparative Example 3>

A porous sheet having a thickness of approximately 20 $\mu$m is made using 100% raw material obtained by refining regenerated cellulose having a fiber diameter of 1.5 dtex and a fiber length of 5 mm until reaching a mean fiber length of 0.21 mm and a fibrillation rate of 52.1%. This sheet is used as a separator of Comparative Example 3. Battery characteristics of the battery using this separator are measured in the same manner as above. Measurement results are given in Table 3.

[Table 3]

Table 3

| | Used raw material | Raw material fiber diameter | Raw material fiber length | Kajaani fiber length | Kajaani fibrillation rate | Thickness | Porosity | Density | Average pore diameter | Degree of pore concentration | Separator resistance | Initial charging efficiency | Initial short-circuit rate | Short-circuit rate when left at 200°C for 10 minutes | Short-circuit rate when overcharged up to 5V |
|---|---|---|---|---|---|---|---|---|---|---|---|---|---|---|---|
| | | dtex | mm | mm | % | μm | % | g/cm$^3$ | μm | % | Ω | % | | | |
| Comparative Example 3 | 100% Solvent spinning rayon | 1.5 | 5 | 0.21 | 52.1 | 19.8 | 70 | 0.45 | 0.19 | 21 | 1.12 | 100 | 0 | 0 | 0 |
| Working Example 5 | 100% Solvent spinning rayon | 1.5 | 5 | 0.7 | 42 | 20.1 | 69 | 0.47 | 0.42 | 72 | 0.68 | 100 | 0 | 0 | 0 |
| Comparative Example 4 | 100% Solvent spinning rayon | 1.5 | 5 | 1.65 | 2 | 20.2 | 72 | 0.42 | 1.82 | 18.5 | 0.65 | 75 | 78 | - | 97 |

<Working Example 5>

A porous sheet having a thickness of approximately 20 μm is made using 100% raw material obtained by refining regenerated cellulose having a fiber diameter of 1.5 dtex and a fiber length of 5 mm until reaching a mean fiber length of approximately 0.7 mm and a fibrillation rate of 4.2%. This sheet is used as a separator of Working Example 5. Battery characteristics of the battery using this separator are measured in the same manner as above. Measurement results are given in Table 3.

<Comparative Example 4>

A porous sheet having a thickness of approximately 20 μm is made using 100% raw material obtained by refining regenerated cellulose having a fiber diameter of 1.5 dtex and a fiber length of 5 mm until reaching a mean fiber length of 1.65 mm and a fibrillation rate of 2.0%. This sheet is used as a separator of Comparative Example 4. Battery characteristics of the battery using this separator are measured in the same manner as above. Measurement results are given in Table 3.

<Comparative Example 5>

A porous sheet having a thickness of approximately 20 μm is made using 100% raw material obtained by refining regenerated cellulose having a fiber diameter of 1.5 dtex and a fiber length of 5 mm until reaching a mean fiber length of 1.2 mm and a fibrillation rate of 0.9%. This sheet is used as a separator of Comparative Example 5. Battery characteristics of the battery using this separator are measured in the same manner as above. Measurement results are given in Table 4.

[Table 4]

Table 4

| | Used raw material | Raw material fiber diameter | Raw material fiber length | Kajaani fiber length | Kajaani fibrillation rate | Thickness | Porosity | Density | Average pore diameter | Degree of pore concentration | Separator resistance | Initial charging efficiency | Initial short-circuit rate | Short-circuit rate when left at 200°C for 10 minutes | Short-circuit rate when overcharged up to 5V |
|---|---|---|---|---|---|---|---|---|---|---|---|---|---|---|---|
| | | dtex | mm | mm | % | $\mu$m | % | g/cm$^3$ | $\mu$m | % | $\Omega$ | % | | | |
| Comparative Example 5 | 100% Solvent spinning rayon | 1.5 | 5 | 1.2 | 0.9 | 19.8 | 72.5 | 0.42 | 1.8 | 21 | 0.59 | 95 | 0 | | 82 |
| Working Example 6 | 100% Solvent spinning rayon | 1.5 | 5 | 1.3 | 4.9 | 20.1 | 68.5 | 0.48 | 0.44 | 74 | 0.62 | 100 | 0 | 0 | 0 |
| Working Example 7 | 100% Solvent spinning rayon | 1.5 | 5 | 1.12 | 32.1 | 19.4 | 70.1 | 0.45 | 0.42 | 81 | 0.62 | 100 | 0 | 0 | 0 |
| Comparative Example 6 | 100% Solvent spinning rayon | 1.5 | 5 | 0.88 | 61.2 | 20.1 | 33.3 | 1.01 | 0.35 | 48 | 3.5 | 100 | 0 | 0 | 0 |

<Working Example 6>

A porous sheet having a thickness of approximately 20 μm is made using 100% raw material obtained by refining regenerated cellulose having a fiber diameter of 1.5 dtex and a fiber length of 5 mm until reaching a mean fiber length of 1.3 mm and a fibrillation rate of 4.9%, and is used as a separator of Working Example 6. Battery characteristics of the battery using this separator are measured in the same manner as above. Measurement results are given in Table 4.

<Working Example 7>

A porous sheet having a thickness of approximately 20 μm is made using 100% raw material obtained by refining regenerated cellulose having a fiber diameter of 1.5 dtex and a fiber length of 5 mm until reaching a mean fiber length of 1.12 mm and a fibrillation rate of 32.1%, and is used as a separator of Working Example 7. Battery characteristics of the battery using this separator are measured in the same manner as above. Measurement results are given in Table 4.

<Comparative Example 6>

A porous sheet having a thickness of approximately 20 μm is made using 100% raw material obtained by refining regenerated cellulose having a fiber diameter of 1.5 dtex and a fiber length of 5 mm until reaching a mean fiber length of 0.88 mm and a fibrillation rate of 61.2%, and is used as a separator of Comparative Example 6. Battery characteristics of the battery using this separator are measured in the same manner as above. Measurement results are given in Table 4.

<Comparative Example 7>

A porous sheet having a thickness of approximately 3 μm is made using 100% raw material obtained by refining regenerated cellulose having a fiber diameter of 1.5 dtex and a fiber length of 5 mm until reaching a mean fiber length of 1.3 mm and a fibrillation rate of 5.44%. This sheet is used as a separator of Comparative Example 7. Battery characteristics of the battery using this separator are measured in the same manner as above. Measurement results are given in Table 5.

[Table 5]

Table 5

| | Used raw material | Raw material fiber diameter | Raw material fiber length | Kajaani fiber length | Kajaani fibrillation rate | Thickness | Porosity | Density | Average pore diameter | Degree of pore concentration | Separator resistance | Initial charging efficiency | Initial short-circuit rate | Short-circuit rate when left at 200°C for 10 minutes | Short-circuit rate when overcharged up to 5V |
|---|---|---|---|---|---|---|---|---|---|---|---|---|---|---|---|
| | | dtex | mm | mm | % | μm | % | g/cm$^3$ | μm | % | Ω | % | | | |
| Comparative Example 7 | 100% Solvent spinning rayon | 1.5 | 5 | 1.3 | 5.44 | 3.1 | 80.1 | 0.30 | 2.2 | 25 | 0.11 | 27 | 100 | - | 100 |
| Working Example 8 | 100% Solvent spinning rayon | 1.5 | 5 | 0.76 | 6 | 5.1 | 68 | 0.48 | 0.9 | 72 | 0.45 | 100 | 0 | 0 | 0 |
| Working Example 9 | 100% Solvent spinning rayon | 1.5 | 5 | 0.95 | 7.21 | 25.1 | 70.1 | 0.45 | 0.43 | 84 | 0.62 | 100 | 0 | 0 | 0 |
| Working Example 10 | 100% Solvent spinning rayon | 1.5 | 5 | 1.1 | 6.11 | 40.3 | 69 | 0.47 | 0.41 | 68 | 0.9 | 100 | 0 | 0 | 0 |
| Comparative Example 8 | 100% Solvent spinning rayon | 1.5 | 5 | 1.05 | 5.63 | 65.4 | 69.8 | 0.46 | 0.39 | 70 | 2.3 | 100 | 0 | 0 | 0 |

<Working Example 8>

A porous sheet having a thickness of approximately 5 μm is made using 100% raw material obtained by refining regenerated cellulose having a fiber diameter of 1.5 dtex and a fiber length of 5 mm until reaching a mean fiber length of 0.76 mm and a fibrillation rate of 6.0%. This sheet is used as a separator of Working Example 8. Battery characteristics of the battery using this separator are measured in the same manner as above. Measurement results are given in Table 5.

<Working Example 9>

A porous sheet having a thickness of approximately 25 μm is made using 100% raw material obtained by refining regenerated cellulose having a fiber diameter of 1.5 dtex and a fiber length of 5 mm until reaching a mean fiber length of 0.95 mm and a fibrillation rate of 7.21%. This sheet is used as a separator of Working Example 9. Battery characteristics of the battery using this separator are measured in the same manner as above. Measurement results are given in Table 5.

<Working Example 10>

A porous sheet having a thickness of approximately 40 μm is made using 100% raw material obtained by refining regenerated cellulose having a fiber diameter of 1.5 dtex and a fiber length of 5 mm until reaching a mean fiber length of 1.1 mm and a fibrillation rate of 6.11%. This sheet is used as a separator of Working Example 10. Battery characteristics of the battery using this separator are measured in the same manner as above. Measurement results are given in Table 5.

<Comparative Example 8>

A porous sheet having a thickness of approximately 65 μm is made using 100% raw material obtained by refining regenerated cellulose having a fiber diameter of 1.5 dtex and a fiber length of 5 mm until reaching a mean fiber length of 1.05 mm and a fibrillation rate of 5.63%, and is used as a separator of Comparative Example 8. Battery characteristics of the battery using this separator are measured in the same manner as above. Measurement results are given in Table 5.

<Comparative Example 9>

A porous sheet having a porosity of approximately 25% and a thickness of approximately 20 μm is made using 100% raw material obtained by refining regenerated cellulose having a fiber diameter of 1 dtex and a fiber length of 2 mm until reaching a mean fiber length of 0.88 mm and a fibrillation rate of 52%, the sheet is then calendared under a linear pressure of 800 kg/cm, and is used as a separator of Comparative Example 9. Battery characteristics of the battery using this separator are measured in the same manner as above. Measurement results are given in Table 6.

[Table 6]

Table 6

| | Used raw material | Raw material fiber diameter | Raw material fiber length | Kajaani fiber length | Kajaani fibrillation rate | Thickness | Porosity | Density | Average pore diameter | Degree of pore concentration | Separator resistance | Initial charging efficiency | Initial short-circuit rate | Short-circuit rate when left at 200°C for 10 minutes | Short-circuit rate when overcharged up to 5V |
|---|---|---|---|---|---|---|---|---|---|---|---|---|---|---|---|
| | | dtex | mm | mm | % | $\mu$m | % | g/cm$^3$ | $\mu$m | % | $\Omega$ | % | | | |
| Comparative Example 9 | 100% Solvent spinning rayon | 1 | 2 | 0.88 | 52 | 21 | 25.4 | 1.13 | 0.1 | 79 | 2.2 | 100 | 0 | 0 | 0 |
| Working Example 11 | 100% Solvent spinning rayon | 1 | 5 | 0.95 | 25 | 19.8 | 65.3 | 0.52 | 0.35 | 75 | 0.66 | 100 | 0 | 0 | 0 |

<Working Example 11>

A porous sheet having a thickness of approximately 20 $\mu$m and a porosity of approximately 65% is made using 100% raw material obtained by refining regenerated cellulose having a fiber diameter of 1 dtex and a fiber length of 5 mm until reaching a mean fiber length of 0.95 mm and a fibrillation rate of 25%, and is used as a separator of Working Example 11. Battery characteristics of the battery using this separator are measured in the same manner as above. Measurement results are given in Table 6.

<Working Example 12>

A porous sheet having a thickness of approximately 20 $\mu$m and an average pore diameter of approximately 0.03 $\mu$m is made using 100% raw material obtained by refining regenerated cellulose having a fiber diameter of 1.0 dtex and a fiber length of 5 mm until reaching a mean fiber length of 0.5 mm and a fibrillation rate of 28%, and is used as a separator of Working Example 12. Battery characteristics of the battery using this separator are measured in the same manner as above. Measurement results are given in Table 7.

[Table 7]

Table 7

| | Used raw material | Raw material fiber diameter | Raw material fiber length | Kajaani fiber length | Kajaani fibrillation rate | Thickness | Porosity | Density | Average pore diameter | Degree of pore concentration | Separator resistance | Initial charging efficiency | Initial short-circuit rate | Short-circuit rate when left at 200°C for 10 minutes | Short-circuit rate when overcharged up to 5V |
|---|---|---|---|---|---|---|---|---|---|---|---|---|---|---|---|
| | | dtex | mm | mm | % | μm | % | g/cm$^3$ | μm | % | Ω | % | | | |
| Working Example 12 | 100% Solvent spinning rayon | 1 | 5 | 0.5 | 28 | 20.4 | 39 | 0.92 | 0.03 | 90 | 0.9 | 100 | 0 | 0 | 0 |
| Working Example 13 | 100% Solvent spinning rayon | 1.5 | 5 | 0.85 | 10.5 | 20.2 | 70.5 | 0.45 | 0.45 | 81.5 | 0.62 | 100 | 0 | 0 | 0 |
| Working Example 14 | 100% Solvent spinning rayon | 2 | 5 | 1.1 | 3.2 | 20.1 | 68.9 | 0.47 | 0.94 | 72.3 | 0.58 | 100 | 0 | 0 | 0 |
| Comparative Example 10 | 100% Solvent spinning rayon | 1.5 | 5 | 0.78 | 1.9 | 20 | 73 | 0.41 | 1.5 | 21.1 | 0.6 | 95 | 8 | | 35 |
| Comparative Example 11 | 100% Solvent spinning rayon | 15 | 5 | 0.95 | 0.2 | 20.2 | 77 | 0.35 | 5.2 | 4.2 | 0.62 | 87 | 45 | | 84 |

<Working Example 13>

A porous sheet having a thickness of approximately 20 μm and an average pore diameter of approximately 0.4 μm is made using 100% raw material obtained by refining regenerated cellulose having a fiber diameter of 1.5 dtex and a fiber length of 5 mm until reaching a mean fiber length of 0.85 mm and a fibrillation rate of 10.5%, and is used as a separator of Working Example 13. Battery characteristics of the battery using this separator are measured in the same manner as above. Measurement results are given in Table 7.

<Working Example 14>

A porous sheet having a thickness of approximately 20 μm and an average pore diameter of approximately 0.9 μm is made using 100% raw material obtained by refining regenerated cellulose having a fiber diameter of 2.0 dtex and a fiber length of 5 mm until reaching a mean fiber length of 1.1 mm and a fibrillation rate of 3.2%, and is used as a separator of Working Example 14. Battery characteristics of the battery using this separator are measured in the same manner as above. Measurement results are given in Table 7.

<Comparative Example 10>

A porous sheet having a thickness of approximately 20 μm and an average pore diameter of approximately 1.5 μm is made using 100% raw material obtained by refining regenerated cellulose having a fiber diameter of 1.5 dtex and a fiber length of 5 mm until reaching a mean fiber length of 0.78 mm and a fibrillation rate of less than 1.9%, and is used as a separator of Comparative Example 10. Battery characteristics of the battery using this separator are measured in the same manner as above. Measurement results are given in Table 7.

<Comparative Example 11>

A porous sheet having a thickness of approximately 20 μm and an average pore diameter of approximately 5 μm is made using 100% raw material obtained by refining regenerated cellulose having a fiber diameter of 1.5 dtex and a fiber length of 5 mm until reaching a mean fiber length of 0.95 mm and a fibrillation rate of 0.2%, and is used as a separator of Comparative Example 11. Battery characteristics of the battery using this separator are measured in the same manner as above. Measurement results are given in Table 7.

<Comparative Example 12>

A porous sheet having a thickness of approximately 20 μm, an average pore diameter of approximately 1 μm, and a degree of pore concentration of approximately 5% is made using 100% raw material obtained by refining regenerated cellulose having a fiber diameter of 1.5 dtex and a fiber length of 5 mm until reaching a mean fiber length of 1.81 mm and a fibrillation rate of 0.8%, and is used as a separator of Comparative Example 12. Battery characteristics of the battery using this separator are measured in the same manner as above. Measurement results are given in Table 8.

[Table 8]

Table 8

| | Used raw material | Raw material fiber diameter | Raw material fiber length | Kajaani fiber length | Kajaani fibrillation rate | Thickness | Porosity | Density | Average pore diameter | Degree of pore concentration | Separator resistance | Initial charging efficiency | Initial short-circuit rate | Short-circuit rate when left at 200°C for 10 minutes | Short-circuit rate when overcharged up to 5V |
|---|---|---|---|---|---|---|---|---|---|---|---|---|---|---|---|
| | | dtex | mm | mm | % | μm | % | g/cm$^3$ | μm | % | Ω | % | | | |
| Comparative Example 12 | 100% Solvent spinning rayon | 1.5 | 5 | 1.81 | 0.8 | 20.3 | 82 | 0.27 | 1.1 | 5.3 | 0.62 | 90 | 0 | - | 48 |
| Comparative Example 13 | 100% Solvent spinning rayon | 1.5 | 5 | 1.46 | 1.2 | 20.4 | 74 | 0.39 | 0.8 | 25 | 0.55 | 90 | 0 | 0 | 22 |
| Conventional Example 1 | Polypropylene microporous film | | | | | 25 | 45 | | 0.05 | | 0.8 | 100 | 0 | 100 | 0 |

<Comparative Example 13>

A porous sheet having a thickness of approximately 20 $\mu$m, an average pore diameter of approximately 0.8 $\mu$m, and a degree of pore concentration of approximately 25% is made using 100% raw material obtained by refining regenerated cellulose having a fiber diameter of 1.5 dtex and a fiber length of 5 mm until reaching a mean fiber length of 1.46 mm and a fibrillation rate of 1.2%, and is used as a separator of Comparative Example 13. Battery characteristics of the battery using this separator are measured in the same manner as above. Measurement results are given in Table 8.

<Conventional Example 1>

Battery characteristics of a battery using a polypropylene microporous film (0.05 $\mu$m average pore diameter) as a separator are measured in the same manner as above. Measurement results are given in Table 8 as Conventional Example 1.

<Comparative Example 14>

A porous sheet having a thickness of approximately 20 $\mu$m is made using a raw material obtained by refining a blend of 50% regenerated cellulose and 50% Manila hemp having a fiber diameter of 1.5 dtex and a fiber length of 5 mm until reaching a mean fiber length of 1.4 mm and a fibrillation rate of 18.1%, and is used as a separator of Comparative Example 14. Battery characteristics of the battery using this separator are measured in the same manner as above. Measurement results are given in Table 9.

[Table 9]

Table 9

| | Used raw material | Raw material fiber diameter | Raw material fiber length | Kajaani fiber length | Kajaani fibrillation rate | Thickness | Porosity | Density | Average pore diameter | Degree of pore concentration | Separator resistance | Initial charging efficiency | Initial short-circuit rate | Short-circuit rate when left at 200°C for 10 minutes | Short-circuit rate when overcharged up to 5V |
|---|---|---|---|---|---|---|---|---|---|---|---|---|---|---|---|
| | | dtex | mm | mm | % | $\mu$m | % | g/cm$^3$ | $\mu$m | % | $\Omega$ | % | | | |
| Comparative Example 14 | 50% Solvent spinning rayon 50% Manila hemp | 1.5 | 5 | 1.4 | 18.1 | 20.5 | 40 | 0.91 | 0.3 | 70 | 7.2 | 100 | 0 | 0 | 0 |
| Working Example 15 | 65% Solvent spinning rayon 35% Manila hemp | 1.5 | 5 | 1.15 | 12.1 | 22 | 68 | 0.48 | 0.4 | 70 | 1.5 | 100 | 0 | 0 | 0 |
| Working Example 16 | 80% Solvent spinning rayon 20% Manila hemp | 1.5 | 5 | 1.11 | 8.5 | 21 | 70 | 0.45 | 0.4 | 70 | 0.8 | 100 | 0 | 0 | 0 |

<Working Example 15>

A porous sheet having a thickness of approximately 20 μm is made using a raw material obtained by refining a blend of 65% regenerated cellulose and 35% Manila hemp having a fiber diameter of 1.5 dtex and a fiber length of 5 mm until reaching a mean fiber length of 1.15 mm and a fibrillation rate of 12.1%, and is used as a separator of Working Example 15. Battery characteristics of the battery using this separator are measured in the same manner as above. Measurement results are given in Table 9.

<Working Example 16>

A porous sheet having a thickness of approximately 20 μm is made using a raw material obtained by refining a blend of 80% regenerated cellulose and 20% Manila hemp having a fiber diameter of 1.5 dtex and a fiber length of 5 mm until reaching a mean fiber length of 1.11 mm and a fibrillation rate of 8.5%, and is used as a separator of Working Example 16. Battery characteristics of the battery using this separator are measured in the same manner as above. Measurement results are given in Table 9.

<Comparative Example 15>

A porous sheet having a thickness of approximately 20 μm is made using a raw material obtained by refining a blend of 50% regenerated cellulose having a fiber diameter of 1.5 dtex and a fiber length of 5 mm and 50% PET fine fiber having a fiber diameter of 0.2 dtex and a fiber length of 5 mm until reaching a mean fiber length of 1.35 mm and a fibrillation rate of 4.6%, and is used as a separator of Comparative Example 15. Battery characteristics of the battery using this separator are measured in the same manner as above. Measurement results are given in Table 10.

[Table 10]

Table 10

| | Used raw material | Raw material fiber diameter | Raw material fiber length | Kajaani fiber length | Kajaani fibrillation rate | Thickness | Porosity | Density | Average pore diameter | Degree of pore concentration | Separator resistance | Initial charging efficiency | Initial short-circuit rate | Short-circuit rate when left at 200°C for 10 minutes | Short-circuit rate when overcharged up to 5V |
|---|---|---|---|---|---|---|---|---|---|---|---|---|---|---|---|
| | | dtex | mm | mm | % | $\mu$m | % | g/cm$^3$ | $\mu$m | % | $\Omega$ | % | | | |
| Comparative Example 15 | 50% Solvent spinning rayon 50% PET fiber | 1.5 | 5 | 1.35 | 4.6 | 20.2 | 75 | - | 3 | 40 | 0.44 | 85 | 22 | | 67 |
| Working Example 17 | 65% Solvent spinning rayon 35% PET fiber | 1.5 | 5 | 1.2 | 8.2 | 20.3 | 70 | - | 0.95 | 55 | 0.55 | 100 | 0 | 0 | 0 |
| Working Example 18 | 80% Solvent spinning rayon 20% PET fiber | 1.5 | 5 | 1.02 | 4.9 | 20.7 | 70 | - | 0.4 | 60 | 0.58 | 100 | 0 | 0 | 0 |

<Working Example 17>

A porous sheet having a thickness of approximately 20 $\mu$m is made using a raw material obtained by refining a blend of 65% regenerated cellulose having a fiber diameter of 1.5 dtex and a fiber length of 5 mm and 35% PET fine fiber having a fiber diameter of 0.2 dtex and a fiber length of 5 mm until reaching a mean fiber length of 1.20 mm and a fibrillation rate of 8.2%, and is used as a separator of Working Example 17. Battery characteristics of the battery using this separator are measured in the same manner as above. Measurement results are given in Table 10.

<Working Example 18>

A porous sheet having a thickness of approximately 20 $\mu$m is made using a raw material obtained by refining a blend of 65% regenerated cellulose having a fiber diameter of 1.5 dtex and a fiber length of 5 mm and 35% PET fine fiber having a fiber diameter of 0.2 dtex and a fiber length of 5 mm until reaching a mean fiber length of 1.02 mm and a fibrillation rate of 4.9%, and is used as a separator of Working Example 18. Battery characteristics of the battery using this separator are measured in the same manner as above. Measurement results are given in Table 10.

<Working Example 19>

A porous sheet having a thickness of approximately 10 $\mu$m is made using a raw material obtained by refining 100% regenerated cellulose having a fiber diameter of 1.5 dtex and a fiber length of 5 mm until reaching a mean fiber length of 0.92 mm and a fibrillation rate of 8.8%, the sheet is then calendared under a linear pressure of 750 kg/cm at a temperature of 25°C, and is used as a separator of Working Example 19. Battery characteristics of the battery using this separator are measured in the same manner as above. Measurement results are given in Table 11.

[Table 11]

Table 11

| | Used raw material | Pressing pressure | Pressing temperature | Raw material fiber diameter | Raw material fiber length | Kajaani fiber length | Kajaani fibrillation rate | Thickness | Porosity | Density | Average pore diameter | Degree of pore concentration | Separator resistance | Initial charging efficiency | Initial short-circuit rate | Short-circuit rate when left at 200°C for 10 minutes | Short-circuit rate when overcharged upto5V |
|---|---|---|---|---|---|---|---|---|---|---|---|---|---|---|---|---|---|
| | | kg/cm | °C | dtex | mm | mm | % | μm | % | g/cm³ | μm | % | Ω | % | % | % | % |
| Working Example 19 | 100% Solvent spinning rayon | 750 | 25 | 1.5 | 5 | 0.92 | 8.8 | 10.1 | 28 | 1.09 | 0.09 | 92 | 1.15 | 0 | 0 | 0 | 0 |
| Working Example 20 | 100% Solvent spinning rayon | 400 | 25 | 2 | 8 | 0.8 | 10.5 | 25.2 | 34.5 | 0.99 | 0.15 | 85 | 0.81 | 0 | 0 | 0 | 0 |
| Working Example 21 | 100% Solvent spinning rayon | 30 | 25 | 1.5 | 5 | 0.92 | 8.8 | 24.5 | 69.8 | 0.46 | 0.45 | 85 | 0.67 | 0 | 0 | 0 | 0 |
| Working Example 22 | 100% Solvent spinning rayon | 70 | 25 | 1.5 | 5 | 0.92 | 8.8 | 20.1 | 58.2 | 0.63 | 0.3 | 85 | 0.7 | 0 | 0 | 0 | 0 |
| Working Example 23 | 100% Solvent spinning rayon | 400 | 25 | 1.5 | 5 | 0.92 | 8.8 | 25.2 | 70.1 | 0.45 | 0.45 | 85 | 0.65 | 0 | 0 | 0 | 0 |
| Working Example 24 | 100% Solvent spinning rayon | 400 | 60 | 1.5 | 5 | 0.8 | 10.5 | 24 | 31.1 | 1.04 | 0.15 | 85 | 0.84 | 0 | 0 | 0 | 0 |
| Working Example 25 | 100% Solvent spinning rayon | 400 | 160 | 1.5 | 5 | 0.8 | 10.5 | 22 | 29.5 | 1.06 | 0.14 | 85 | 0.84 | 0 | 0 | 0 | 0 |

| | Used raw material | Press- ing pres- sure | Pressing tempera- ture | Raw materi- al fiber diame- ter | Raw materi- al fiber length | Kajaa- ni fiber length | Kajaani fibrilla- tion rate | Thickness | Porosi- ty | Densi- ty | Aver- age pore di- ameter | Degree of pore con- centration | Separa- tor resist- ance | Initial charg -ing effi- ciency | Initial short- cir- cuit rate | Short- circuit rate when left at 200°C for 10 min- utes | Short-cir- cuit rate when over- charged upto5V |
|---|---|---|---|---|---|---|---|---|---|---|---|---|---|---|---|---|---|
| | | kg/cm | °C | dtex | mm | mm | % | μm | % | g/cm³ | μm | % | Ω | % | % | % | % |
| Compara- tive Exam- ple 16 | 100% Sol- vent spin- ning rayon | 400 | 200 | 1.5 | 5 | 0.8 | 10.5 | Decom- posed | - | - | - | - | - | - | - | - | - |
| Compara- tive Exam- ple 17 | Polypropyl- ene micro- porous film | 100 | 25 | - | - | - | - | 20 | 0 | - | - | - | Infinity | - | - | - | - |

<Working Example 20>

A porous sheet having a thickness of approximately 25 μm is made using a raw material obtained by refining 100% regenerated cellulose having a fiber diameter of 2.0 dtex and a fiber length of 8 mm until reaching a mean fiber length of 0.80 mm and a fibrillation rate of 10.5%, the sheet is then calendared under a linear pressure of 400 kg/cm at a temperature of 25°C, and is used as a separator of Working Example 20. Battery characteristics of the battery using this separator are measured in the same manner as above. Measurement results are given in Table 11.

<Working Example 21>

A porous sheet having a thickness of approximately 25 μm is made using a raw material obtained by refining 100% regenerated cellulose having a fiber diameter of 1.5 dtex and a fiber length of 5 mm until reaching a mean fiber length of 0.92 mm and a fibrillation rate of 8.8%, the sheet is then calendared under a linear pressure of 30 kg/cm at a temperature of 25°C, and is used as a separator of Working Example 21. Battery characteristics of the battery using this separator are measured in the same manner as above. Measurement results are given in Table 11.

<Working Example 22>

A porous sheet having a thickness of approximately 25 μm is made using a raw material obtained by refining 100% regenerated cellulose having a fiber diameter of 1.5 dtex and a fiber length of 5 mm until reaching a mean fiber length of 0.92 mm and a fibrillation rate of 8.8%, the sheet is then calendared under a linear pressure of 70 kg/cm at a temperature of 25°C, and is used as a separator of Working Example 22. Battery characteristics of the battery using this separator are measured in the same manner as above. Measurement results are given in Table 11.

<Working Example 23>

A porous sheet having a thickness of approximately 25 μm is made using a raw material obtained by refining 100% regenerated cellulose having a fiber diameter of 1.5 dtex and a fiber length of 5 mm until reaching a mean fiber length of 0.92 mm and a fibrillation rate of 8.8%, the sheet is then calendared under a linear pressure of 400 kg/cm at a temperature of 25°C, and is used as a separator of Working Example 23. Battery characteristics of the battery using this separator are measured in the same manner as above. Measurement results are given in Table 11.

<Working Example 24>

A porous sheet is made using a raw material obtained by refining 100% regenerated cellulose having a fiber diameter of 1.5 dtex and a fiber length of 5 mm until reaching a mean fiber length of 0.80 mm and a fibrillation rate of 10.5%, the sheet is then calendared under a linear pressure of 400 kg/cm at a temperature of 60°C, and is used as a separator of Working Example 24. Battery characteristics of the battery using this separator are measured in the same manner as above. Measurement results are given in Table 11.

<working Example 25>

A porous sheet is made using a raw material obtained by refining 100% regenerated cellulose having a fiber diameter of 1.5 dtex and a fiber length of 5 mm until reaching a mean fiber length of 0.80 mm and a fibrillation rate of 10.5%, the sheet is then calendared under a linear pressure of 400 kg/cm at a temperature of 160°C, and is used as a separator of Working Example 25. Battery characteristics of the battery using this separator are measured in the same manner as above. Measurement results are given in Table 11.

<Comparative Example 16>

A porous sheet is made using a raw material obtained by refining 100% regenerated cellulose having a fiber diameter of 1.5 dtex and a fiber length of 5 mm until reaching a mean fiber length of 0.80 mm and a fibrillation rate of 10.5%, the sheet is then calendared under a linear pressure of 400 kg/cm at a temperature of 200°C, and is used as a separator of Comparative Example 16. Upon calendaring in Comparative Example 16, the cellulose is decomposed and thus a sheet could not be obtained.

<Comparative Example 17>

A sheet resulting from calendaring a polypropylene microporous film (0.05 μm average pore diameter) under a linear pressure of 100 kg/cm at a temperature of 25°C is used as a separator. Battery characteristics of the battery using this separator are measured in the same manner as above. Measurement results are given in Table 11.

<Evaluation>

Working Example 1 and Working Example 2 shown in Table 1 are cases where the raw material fiber diameter is 1.0 dtex and 2.0 dtex, respectively, and while fibrillation is also favorable, when the raw material fiber diameter is 2.5 dtex as in Comparative Example 1, the average pore diameter is 1.8 μm and the pore concentration is 21% without increase in the fibrillation rate. The battery characteristics of Comparative Example 1 exhibited that an initial short circuit did not occur but many short-circuit defects occurred when charged up to 5V. As a result, it can be seen that a raw material fiber diameter of 2 dtex or less allows achievement of the results of the embodiment.

Working Example 3 and Working Example 4 shown in Table 2 have a raw material fiber length of 2 mm and 8 mm, respectively, and exhibit favorable separator characteristics. However, when the raw material fiber length is 10 mm as in Comparative Example 2, fibers become entangled, resulting in a non-uniform sheet. As a result, the pore concentration is 25%, and many short-circuit defects occur when charged up to 5V. Accordingly, a raw material fiber length of 8mm or less allows achievement of the results of the embodiment.

When the mean fiber length is 0.21 mm that is short, as in Comparative Example 3 shown in Table 3, the separator resistance increases greatly, which can be judged as inappropriate as a separator. Moreover, when the mean fiber length is 1.65 mm that is long, as in Comparative Example 4, the average pore diameter increases and many initial short-circuit defects occur. On the other hand, it can be said that fibrillated raw material fiber length is generally preferable within a range of 0.3 mm to 1.5 mm since favorable battery characteristics are obtained in Working Example 5 and Working Examples 2 and 4 shown in Tables 1 and 2.

In the case of a fibrillation rate of 0.9 that is small, the average pore diameter is 1.8 mm and many charging defects occur at 5V, as in Comparative Example 5 shown in Table 4. Moreover, when the fibrillation rate is increased to 61.2% as in Comparative Example 6, the separator resistance increases even though there are no short-circuit defects, and may thus be judged as unfavorable as a separator for a nonaqueous battery. On the other hand, as a result of decreasing the fibrillation rate in Working Example 6 and Working Example 7, it can be seen that a fibrillation rate of 3 to 50% is more favorable due to favorable battery characteristics.

As a result of decreasing the thickness of the separator to 3.1 μm in Comparative Example 7 shown in Table 5, the shielding property is poor and many initial short-circuit defects occur. The shielding property may be secured if thickness is 5.1 μm as in Working Example 8. However, the pore diameter is 0.9 μm, which is fairly large. In Working Example 9 and Working Example 10, the battery characteristics are favorable and separator resistance is also low, which is favorable.

In contrast, when the separator thickness is 65.4 μm as in Comparative Example 8, separator resistance increases, which is an unfavorable result as a separator for a nonaqueous battery. It can be understood from the results in Table 5 that the separator thickness is preferable within a range of 5 μm to 60 μm.

When porosity is 25.4% through calendaring etc., as shown in Comparative Example 9 of Table 6, while the shielding property gives effective results, it is not appropriate as a separator for a nonaqueous battery since the separator resistance has increased. In contrast, Working Example 11 that has a porosity of 65.3% exhibits favorable battery characteristics. Moreover, it can also be understood from Working Example 20 etc. that favorable results can be secured as long as the porosity of the separator is within a range of 35 to 80%.

It is clear from Working Examples 12 to 14 shown in Table 7 that favorable battery characteristics are given by an average pore diameter of 0.03 to 0.94 μm. In contrast, when the average pore diameter becomes large as in Comparative Examples 10 and 11, the initial charging efficiency decreases and many short-circuit defects occur. This shows that separator pore diameters within a range of 0.03 to 1.0 μm give the results of the present invention sufficiently.

As shown in Comparative Examples 12 and 13 of Table 8, many short-circuit defects occur when the pore concentration is smaller than 25%. It is understood that a degree of pore concentration of approximately 30% or more is preferable so as to prevent short-circuit defects. While a polypropylene microporous film is given in Conventional Example 1, the separator resistance thereof is comparatively high, and all of the polypropylene microporous films are determined inferior when left for ten minutes at 200°C, and it can be understood that all of Working Examples 1 to 18 are effective in terms of safety.

As shown in Table 9, while Working Examples 15 and 16 where Manila hemp is blended exhibit slightly higher separator resistance, the battery characteristics are otherwise favorable. However, the separator resistance in Comparative Example 15 has increased remarkably, which is unfavorable as a separator for a nonaqueous battery.

Working Examples 17 and 18 where PET fibers are blended exhibit favorable battery characteristics, as shown in Table 10. However, a short-circuit defect has occurred in Comparative Example 15 due to an increase in the average pore diameter. It can be understood from the results in Table 9 and Table 10 that a regenerated cellulose blending ratio is preferably 60% or greater.

As shown in Table 11, the battery characteristics in Working Examples 19 to 25 in which the results of calendaring are evaluated, are all satisfactory. However, when the press linear pressure is increased to 750 kg/cm as in Working Example 19, the separator resistance is 1.15 $\Omega$, which is greater than other standards. On the other hand, when the press linear pressure is decreased to 30 kg/cm as in Working Example 21, the thickness of the separator is hardly reduced, exhibiting little pressing effect. This shows that a press linear pressure of 50 kg/cm to 750 kg/cm is more favorable.

Moreover, comparison of Working Example 20 and Working Examples 23 to 25 reveals that the pressing effect is stronger as the temperature is increased even under the same press linear pressure. This is considered an effect from thermal calendaring. Furthermore, in Comparative Example 16 in which the calendaring is performed at a temperature of 200°C, the cellulose material is decomposed and a sheet is not obtained. Therefore, calendaring of the embodiment may be carried out at a temperature with which cellulose is not decomposed.

In the case of calendaring the polypropylene microporous film of Comparative Example 17, it can be judged that the pores are closed since calendaring under relatively moderate conditions of 25°C and a linear pressure of 100 kg/cm makes the separator resistance infinite. Therefore, while a separator cannot be obtained by calendaring a polyolefin microporous film, calendaring is effective in making a separator through the use of the above-mentioned regenerated-cellulose fibers, and may be used to control thickness and porosity.

According to the embodiment described above, an optimal separator can be provided for the nonaqueous battery having high output characteristics, high reliability, and heat resistance. Alternatively, a nonaqueous battery using the separator of the embodiment may be provided as an optimal battery for a power source for an electric vehicle that requires high safety.

For example, while a typical film-based microporous film separator has a porosity of approximately 40 to 50%, the separator of the embodiment can have a porosity of 30 to 80% or higher.

In this manner, the separator of the embodiment exhibits excellent heat resistance, and can keep a separator shape and maintain separator functions at a temperature of 180°C at which a typical polyolefin microporous film separator to be melted down. As a result, incorporation of the above separator allows provision of a high-output, highly safe nonaqueous battery that does not internally short circuit even at high temperatures.

Moreover, the above separator can improve short-circuit resistance and dendrite resistance since the average pore diameter is 1 $\mu$m or less, which is difficult with the conventional unwoven cloth, and distribution is sharp, and can thus drastically improve safety of the nonaqueous battery in which this separator is incorporated.

In this manner, use of cellulose fibers as a raw material with a defined fibrillated condition allows provision of a porous sheet (separator) having controlled thickness, porosity, and average pore diameter of through-holes, and incorporation thereof allows provision of a nonaqueous battery having improved short-circuit resistance and heat resistance.

[Industrial Applicability]

The separator of the present invention is an optimal separator for a nonaqueous battery having high output characteristics, and excellent safety and heat resistance. And the nonaqueous battery using the separator of the present invention is an optimal battery for a power source for an electric vehicle that requires safety.

**Claims**

1. A separator that is a porous sheet made to a thickness of 5 to 60 $\mu$m, a porosity of 30 to 80%, and an average pore diameter of through-holes of 0.03 $\mu$m to 1.0 $\mu$m, and is using a raw material made of fibrillated regenerated-cellulose fibers having a fiber diameter of 2.0 dtex or less and a fiber length of 8 mm or less.

2. The separator according to claim 1, wherein 30% or more of the through-holes are distributed within a range of ±50% of the average pore diameter.

3. The separator according to claim 1 or claim 2, wherein the raw material contains 60 to 100% of the regenerated-cellulose fibers.

4. The separator according to any one of claim 1 to claim 3, wherein the porous sheet is pressed.

**5.** A nonaqueous battery using the separator according to any one of claim 1 to claim 4.

## INTERNATIONAL SEARCH REPORT

International application No.

PCT/JP2016/057251

| A. CLASSIFICATION OF SUBJECT MATTER |
|---|
| *H01M2/16* (2006.01) i |

According to International Patent Classification (IPC) or to both national classification and IPC

| B. FIELDS SEARCHED |
|---|
| Minimum documentation searched (classification system followed by classification symbols)<br>H01M2/16 |

Documentation searched other than minimum documentation to the extent that such documents are included in the fields searched

| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 2013-206591 A (Daicel Corp.),<br>07 October 2013 (07.10.2013),<br>paragraphs [0020], [0024], [0026], [0027],<br>[0051] to [0062], [0086]<br>(Family: none) | 1–5 |
| A | JP 2012-142246 A (Mitsubishi Paper Mills Ltd.),<br>26 July 2012 (26.07.2012),<br>(Family: none) | 1–5 |
| A | JP 2012-134024 A (Mitsubishi Paper Mills Ltd.),<br>12 July 2012 (12.07.2012),<br>(Family: none) | 1–5 |
| A | JP 2014-186915 A (Nippon Kodoshi Corp.),<br>02 October 2014 (02.10.2014),<br>(Family: none) | 1–5 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>27 April 2016 (27.04.16) | Date of mailing of the international search report<br>17 May 2016 (17.05.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2016/057251 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2013-157230 A  (Nippon Kodoshi Corp.),<br>15 August 2013 (15.08.2013),<br>& US 2015/0010828 A1    & WO 2013/114949 A1<br>& EP 2811544 A1        & CN 104081558 A<br>& HK 1201992 A | 1-5 |

Form PCT/ISA/210 (continuation of second sheet) (January 2015)

**REFERENCES CITED IN THE DESCRIPTION**

**Patent documents cited in the description**

- JP H08306352 A
- JP 2012008559 A
- JP 2002355938 A
- JP 4151852 B